# EUROPÄISCHE PATENTSCHRIFT

(11) **EP 1 697 187 B1**
(45) Veröffentlichungstag und Bekanntmachung des Hinweises auf die Patenterteilung: **17.09.2008**
(21) Anmeldenummer: 04820601.5
(22) Anmeldetag: 28.10.2004
(51) Int. Cl.: B60T 7/10, B60T 13/74

(54) **STELLEINRICHTUNG, INSBESONDERE KRAFTFAHRZEUG-FESTSTELLBREMSE**
SETTING DEVICE, PARTICULARLY A MOTOR VEHICLE PARKING BRAKE
DISPOSITIF DE POSITIONNEMENT, NOTAMMENT FREIN DE STATIONNEMENT D'AUTOMOBILE

(30) Priorität: 22.12.2003 DE 10361127
(43) Veröffentlichungstag der Anmeldung: 06.09.2006
(73) Patentinhaber: Continental Automotive GmbH, 30165 Hannover (DE)
(72) Erfinder: ROOS, Stephan, 97877 Wertheim (DE); KRAFT, Ekkehard, 97282 Retzstadt (DE); DEUTLOFF, Norbert, 97291 Thüngersheim (DE); SAUER, Armin, 97450 Arnstein-Schwebenried (DE)
(86) Internationale Anmeldenummer: PCT/EP2004/052705
(87) Internationale Veröffentlichungsnummer: WO 2005/061293

(56) Entgegenhaltungen:
- WO-A-98/56633
- DE-A1- 10 102 685
- US-A- 4 532 462
- US-A- 5 180 038

## Beschreibung

Die Erfindung bezieht sich auf eine Stelleinrichtung, insbesondere eine Kraftfahrzeug-Feststellbremse gemäß Patentanspruch 1 bzw. Patentanspruch 22.

Durch die DE 101 02 685 A1 ist ein Betätigungsmechanismus für eine Bremse mit einem von einem Aktuator über eine Spindelwelle betätigbaren Bremszug und mit einem Kraftsensor zur Bestimmung der mechanischen Belastung des Bremszuges beim Anziehen der Bremse bekannt, bei welchen die mechanische Belastung des Bremszuges über den Aktuator entkoppelt von dem Bremszug bestimmbar ist; der Kraftsensor enthält eine axial zwischen dem bremsseitigen Ende der Spindelwelle und einem den Betätigungsmechanismus aufnehmenden Gehäuse angeordnete Schraubenfeder, deren Längenänderung bei Betätigung der Spindelwelle zum Anzug der Bremse durch einen Hall-Chip innerhalb der Schraubenfeder gemessen wird und als Maß für die auf den Bremszug beim Anziehen der Bremse ausgeübte Kraft dient.

Die gattungsgemäße US-A-4 532 462 offenbart einen elektrischen Aktuator mit einem Federsystem zur Erzeugung einer Bremskraft. Dieser Aktuator ist mit Messmitteln ausgestattet, die in Verbindung mit dem Federsystem eine Aussage über die erzeugte Kraft erlauben.

Gemäß Aufgabe vorliegender Erfindung soll, ausgehend von einem Betätigungsmechanismus der vorgenannten Art, eine Stelleinrichtung geschaffen werden, die sich durch eine kompakte Bauart auszeichnet und die Möglichkeit einer Bremszug-Kraftmessung auch bei Lösung der Bremse, insbesondere im Blockierungsfall, auf einfache Weise erlaubt.

Die Lösung der vorgenannten Aufgabe gelingt durch eine Stelleinrichtung gemäß Patentanspruch 1 bzw. 22; vorteilhafte Ausgestaltungen sind Gegenstand der Unteransprüche.

Die Anordnung des elastischen Elementes im Bereich der Hohlwelle, insbesondere in Form einer konzentrisch die Hohlwelle und die Spindelwelle umgebenden Schraubenfeder, erlaubt auf einfache Weise eine, insbesondere axial, kompakte Bauform.

Durch Ausbildung des zumindest einen elastischen Elementes sowohl als Druckfederelement als auch als Zugfederelement ist in vorteilhafter Weise eine Kraftmessung und somit Bremszugüberwachung sowohl beim Anziehen als auch beim Lösen der Bremse möglich; nach einer vorteilhaften Ausgestaltung der Erfindung ist die Trennung der Anzugskraft-Messung von der Lösekraft-Messung bei trotzdem kompakter Bauform durch zwei zueinander konzentrische Schraubenfedern möglich. Eine weitere Trennmöglichkeit bei Einhaltung einer kompakten Bauform ist durch Anordnung des zweiten elastischen Elementes in dem für die Hubbewegung der Spindelwelle freizuhaltenden Bauraum vorteilhaft möglich, wobei das Spindelwellenende in den Innenraum des als Schraubenfeder ausgebildeten elastischen Elementes eintauchen kann.

Die durch die Anordnung des zumindest einen elastischen Elementes parallele, insbesondere konzentrisch, kompakte und einfache Bauart kann dadurch noch weiter vervollkommnet werden, dass ein einem bei der axialen Abstützverformung bewegten Kraftsensor-Geber zugeordneter Kraftsensorempfänger in Nähe der Teleskopvorrichtung, z.B. integriert auf einer gemeinsamen Leiterplatte, ohne Notwendigkeit längerer, flexibel zu verlegenden Leitungen, fixierbar und kontaktierbar ist.

Die Erfindung sowie weitere vorteilhafte Ausgestaltungen gemäß Merkmalen der Unteransprüche sind im folgenden anhand schematisch dargestellter Ausführungsbeispiele in der Zeichnung näher erläutert; darin zeigen:

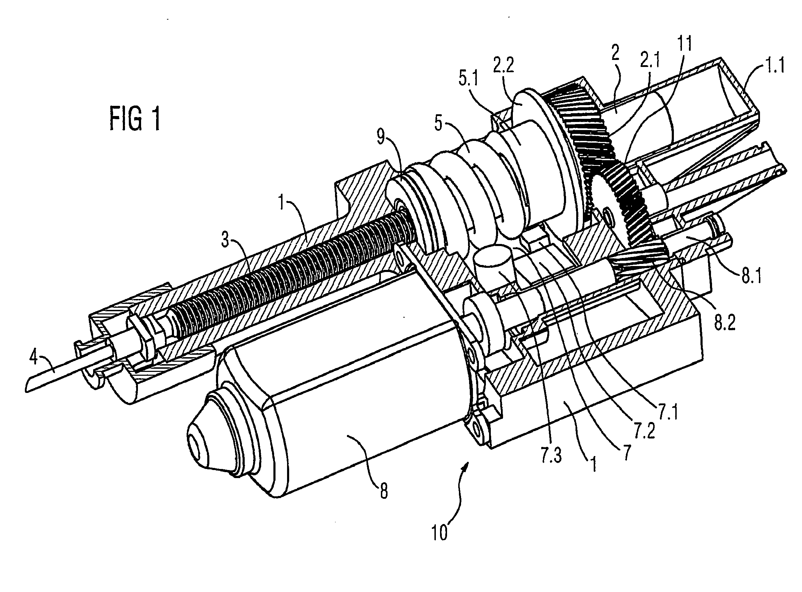

- FIG 1: eine erfindungsgemäße Stelleinrichtung in perspektivischem axialem Teil-Längsschnitt;
- FIG 2: die Stelleinrichtung gemäß FIG 1 mit zur Verdeutlichung freigelegter Steuereinheit und Kraftsensoreinheit;
- FIG 3,4: die Stelleinrichtung gemäß FIG 1 mit angezogenem Bremszug in axialem Total-Längsschnitt und in vergrößertem Ausschnitt im Kraftsensorbereich;
- FIG 5,6: die Stelleinrichtung gemäß FIG 3,4 mit gelöstem Bremszug in axialem Total-Längsschnitt und in vergrößertem Ausschnitt im Kraftsensorbereich;
- FIG 7,8: die Stelleinrichtung gemäß FIG 1 in Bremsstellung mit einem ersten elastischen Element zur Anzugs-Sensierung und einem dazu axial vorgelagerten zweiten elastischen Element zur Löse-Sensierung in axialem Total-Längsschnitt und in vergrößertem Ausschnitt im Kraftsensorbereich;
- FIG 9,10: die Stelleinrichtung gemäß FIG 7,8 mit bei Lösungsversuch blockiertem Bremszug in axialem Total-Längsschnitt und in vergrößertem Ausschnitt im Kraftsensorbereich;
- FIG 11,12: die Stelleinrichtung gemäß FIG 1 in Bremsstellung mit einem ersten elastischen Element zur Anzugs-Sensierung und einem dazu konzentrischen zweiten elastischen Element zur Löse-Sensierung in axialem Total-Längsschnitt und in vergrößertem Ausschnitt im Kraftsensorbereich;
- FIG 13,14: die Stelleinrichtung gemäß FIG 11,12 mit bei Lösungsversuch blockiertem Bremszug in axialem Total-Längsschnitt und in vergrößertem Ausschnitt im Kraftsensorbereich;
- FIG 15,16: die Stelleinrichtung gemäß FIG 1 mit einem einzigen elastischen Element zur Löse-Sensierung mit angezogenem Bremszug in axialem Total-Längsschnitt und in vergrößertem Ausschnitt im Kraftsensorbereich;
- FIG 17,18: die Stelleinrichtung gemäß FIG 15,16 mit bei Lösungsversuch blockiertem Bremszug in axialem Total-Längsschnitt und in vergrößertem Ausschnitt im Kraftsensorbereich.

Von einem Gehäuse 1 mit einem axial abschließenden Gehäusedeckel 1.1 werden als wesentliche Bauteile der erfindungsgemäßen Stelleinrichtung aufgenommen eine axial verschiebbare Teleskopvorrichtung 2;3 enthaltend eine Hohlwelle 2 und eine mit dieser in axialer Dreh-Vorschubverbindung stehende, einen Bremszug 4 betätigende Spindelwelle 3 sowie eine Stelleinheit 10 für die Teleskopvorrichtung 2;3 mit einem Elektromotor 8, der mit einer Schneckenwelle 8.2 als Teil seiner Rotorwelle 8.1 über ein Getriebe-Zwischenrad 11 ein diesem axial verschiebliches mit der Hohlwelle 2 in fester Antriebsverbindung stehendes Antriebsgetrieberad 2.1 antreibt.

Als Vorschubabstützung der Hohlwelle 2 ist ein elastisches Element 5 in Form einer die Hohlwelle 2 bzw. die Spindelwelle 3 konzentrisch umfassenden Schraubenfeder vorgesehen, die als Druckfeder mit ihrem einen Ende über ein Axialdrucklager 9 an eine Schulter des Gehäuses 1 und mit ihrem anderen axialen Ende an einem mit der Hohlwelle 2 in fester Verbindung stehenden Kraftsensor-Geber 2.2 anliegt.

Beim Antrieb der Teleskopvorrichtung 2;3 im Sinne einer Bewegung des Bremszuges 4 nach rechts, d.h. im Sinne eines Festziehens einer, hier nicht näher dargestellten Kraftfahrzeug-Feststellbremse, wird das elastische Element 5 unter Andruck gegen das Axiallager 9 komprimiert; gleichzeitig bewegt sich entsprechend der Komprimierung des elastischen Elementes 5 der Kraftsensor-Geber 2.2 nach links; der dabei zurückgelegte Weg ist somit ein Maß für die von dem Elektromotor 8 über die Getriebeübersetzung, die Hohlwelle 2 und die Spindelwelle 3 auf den Bremszug 4 ausgeübte Anzugskraft bzw. Bremskraft.

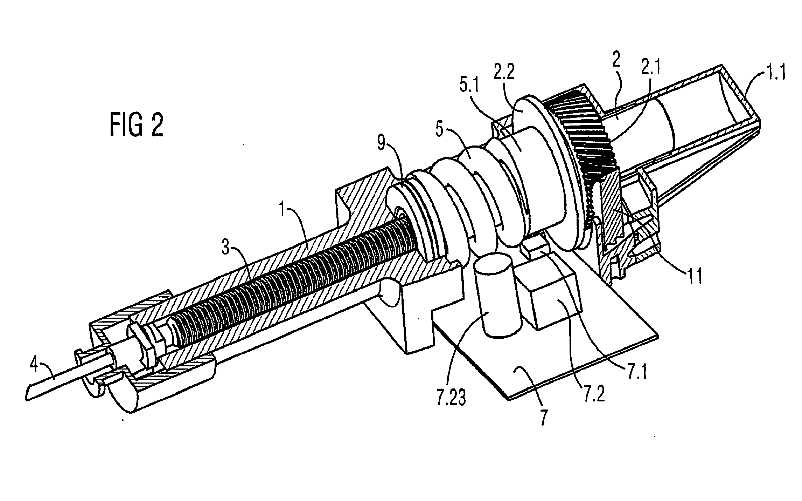

Zur Ermittlung des Federweges bei der Abstützkomprimierung des elastischen Elementes 5, insbesondere in Form einer Schraubenfeder, dient außer dem Kraftsensor-Geber 2.2, insbesondere in Form einer Ferromagnetscheibe, ein diesem zugeordneter Kraftsensor-Empfänger 7.1, insbesondere in Form eines Hall-Chips. Der Kraftsensor-Empfänger 7.1 ist in hinsichtlich einfacher Fertigung ohne Notwendigkeit flexibler Leitungen und in kompakter, vorhandene Freiräume im Bereich des elastischen Elementes 5 innerhalb des Gehäuses 1 ausnutzender, Bauweise - wie insbesondere aus FIG 2 ersichtlich - integrierter Bestandteil einer, vorzugsweise von einer Steuereinheit-Leiterplatte 7 aufgenommene, weitere elektrische bzw. elektronische Bauteile 7.2 bzw. 7.3 enthaltenen, Steuereinheit 7.2;7.3 für die Stelleinheit 10.

Der konstruktive und funktionelle Zusammenhang der zuvor grundsätzlich beschriebenen Bauteile wird im folgenden anhand verschiedener Betriebszustände einer Feststellbremse für den Fall eines Bremsanzuges und/oder einer Bremslösung noch weiter erläutert.

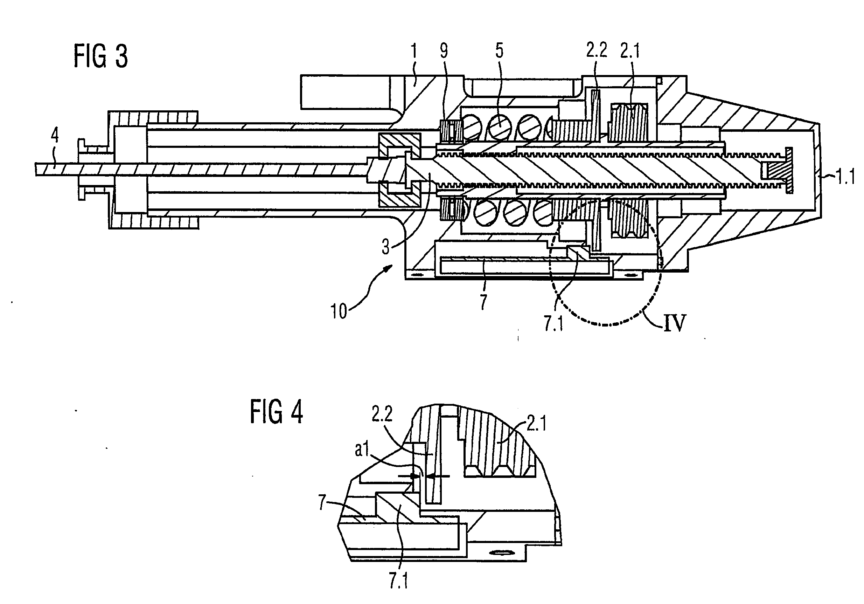

FIG 3 zeigt eine erfindungsgemäße Stelleinrichtung für eine Kraftfahrzeug-Feststellbremse in Bremsstellung mit angezogenem, d.h. nach rechts bewegtem, Bremszug 4; dazu wird von dem Elektromotor 8 über seine Schneckenwelle 8.2 über das Getriebezwischenrad 11 ein Drehmoment auf das konzentrisch mit der als Spindelmutter fungierenden Hohlwelle 2 fest verbundenes Getriebe-Antriebsrad 2.1 übertragen. Über das Innengewinde der Hohlwelle 2 wird über das damit kämmende Außengewinde der Spindelwelle 3 eine axiale Vorschubbewegung auf diese Spindelwelle 3 im Sinne eines Anziehens der Feststellbremse durch den Bremszug 4 ausgeübt. Beim Anziehen des Bremszuges 4 durch die Bewegung der Spindelwelle 3 in die in FIG 3 dargestellte Bremsstellung stützt sich die Hohlwelle 2 über das elastische Element 1 in Form einer die Hohlwelle 2 bzw. die innen kämmende Spindelwelle 3 konzentrisch umgebenden Schraubenfeder an dem Gehäuses 1 ab; dazu liegt das elastische Element, vorzugsweise als Druckfeder, mit ihrem rechten freien Ende an dem mit der Hohlwelle 2 fest verbundenen Kraftsensor-Geber 2.2 und mit ihrem linken Ende über ein Axial-Drucklager 9 an einem Absatz des Gehäuses 1 an.

Beim Anzug des Bremszuges 4 wird das elastische Element 5 proportional der dabei auf den Bremszug 4 über die Spindelwelle 3 ausgeübten Kraft komprimiert; die Hohlwelle 2 bzw. das mit ihr fest verbundene Getriebe-Antriebsrad 2.1 ist dabei entsprechend relativ zu dem Getriebe-Zwischenrad 11 axial verschieblich. Der dieser Komprimierungs-Verformung des elastischen Elementes 5 entsprechende Weg wird - gemäß Ausschnittsvergrößerung in FIG 4 - als Abstandsmaß a1 an zwischen dem mitbewegtem Kraftsensor-Geber 2.2 einerseits und dem zugeordneten, stationär ruhenden Kraftensor-Empfänger 7.1 erfasst und in der vorteilhaft auf der gleichen Steuereinheit-Leiterplatte 7 mitangeordneten Steuereinheit für die Stelleinheit 10 erfasst und zu einer repräsentativen Bremskraft-Messgröße verarbeitet.

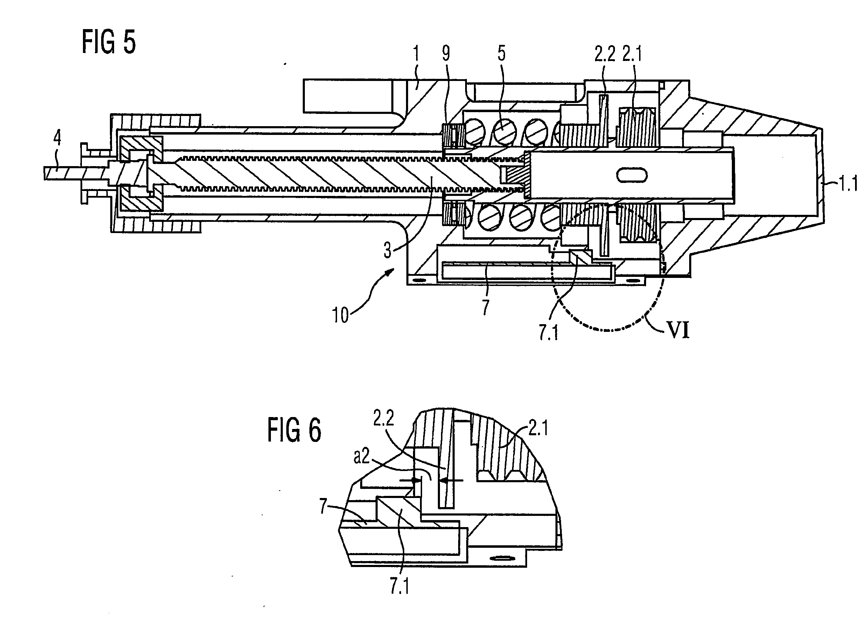

FIG 5 zeigt die Stelleinrichtung gemäß FIG 3 bei gelöster Feststellbremse mit entsprechend in eine linke Lösungsstellung gebrachten Spindelwelle 3 mit Bremszug 4; das elastische Element 5 ist entlastet, entsprechend hat - gemäß vergrößertem Ausschnitt in FIG 6 - der Kraftsensor-Geber 2.2 seinen Abstand zu dem Kraftsensor-Empfänger 7.1 auf ein Abstandsmaß a2 vergrößert.

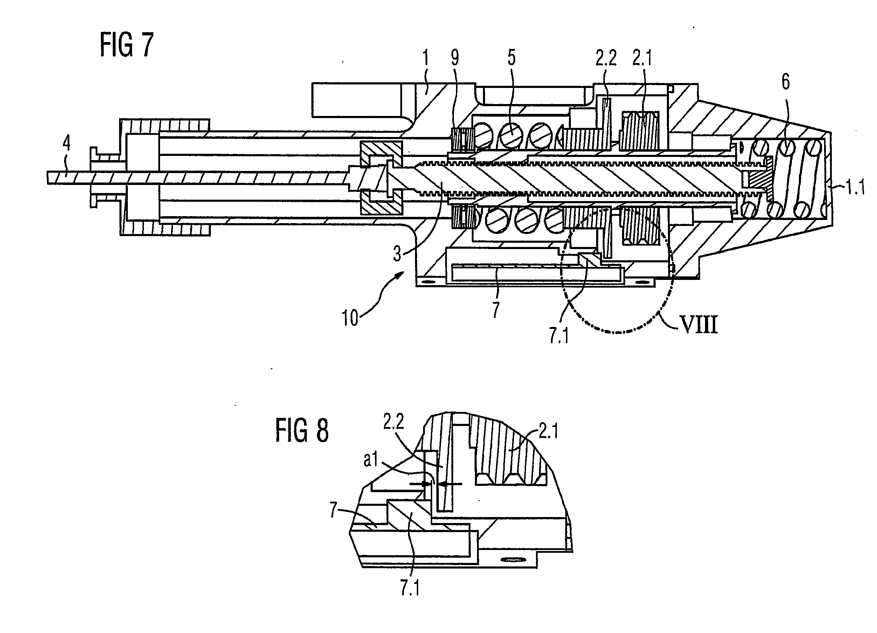

FIG 7,8 bzw. FIG 9,10 zeigen in Ergänzung zu den bisherigen Beispielen ein zweites elastisches Element 6, das der Lösebewegung des Bremszuges 4 zugeordnet ist und diese auf ordnungsgemäßen Ablauf, insbesondere zur Erkennung eines Blockierungsfalles, überwacht.

FIG 7,8 zeigen eine ordnungsgemäße Bremsstellung mit in eine rechte Bremsstellung gebrachter Spindelwelle 3 gemäß FIG 7 und einem Abstandsmaß a1 entsprechend einer definierten Druckbelastung des ersten elastischen Elementes 5 zwischen dem Kraftsensor-Geber 2.2 einerseits und dem Kraftsensor-Empfänger 7.1 andererseits gemäß FIG 8. Das zweite elastische Element 6 ist unbelastet. Eine kompakte Bauweise wird dadurch erreicht, dass sich das rechte Ende der Spindelwelle 3 innerhalb einer als elastisches Element 6 vorgesehenen Schraubenfeder bewegen kann und damit in vorteilhafter Weise keinen zusätzlichen Bauraum benötigt.

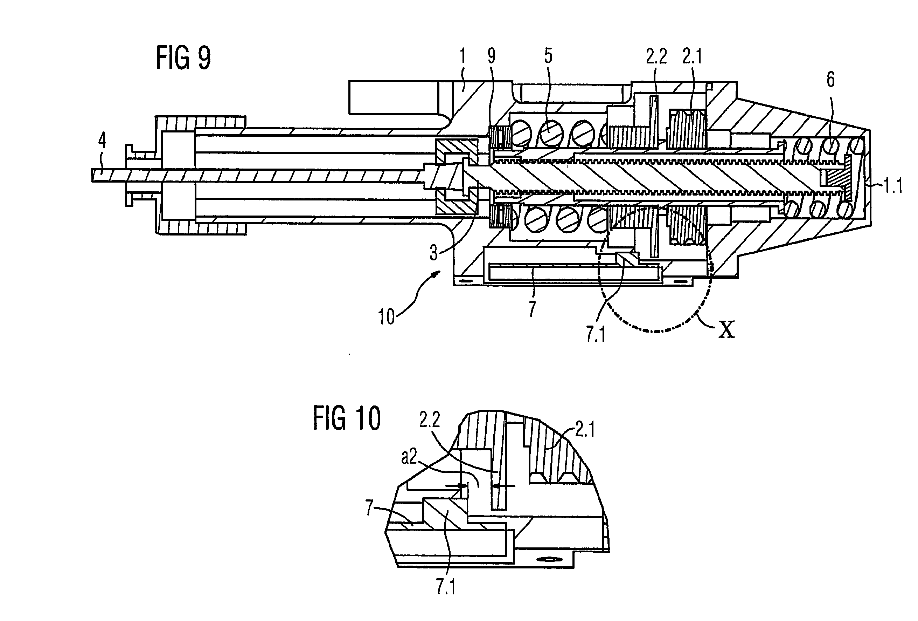

FIG 9,10 erläutern nunmehr einen Bremslöseversuch bei - z.B. durch Vereisung verursachter - Blockierung des Bremszuges 4. Bei dem Löseversuch bewegen sich die Spindelwelle 3 und die Hohlwelle 2 um ein geringes - durch den Unterschied des Abstandmaßes a1 gemäß FIG 8 gegenüber dem Abstandmaß a2 gemäß FIG 10 dokumentiertes - Maß, wobei durch Anschläge der Hohlwelle 2 an das zweite elastische Element 6 dieses komprimiert wird und eine definierte Kraftanalyse über die Verarbeitung des Abstandsmaßes a2 ermöglicht.

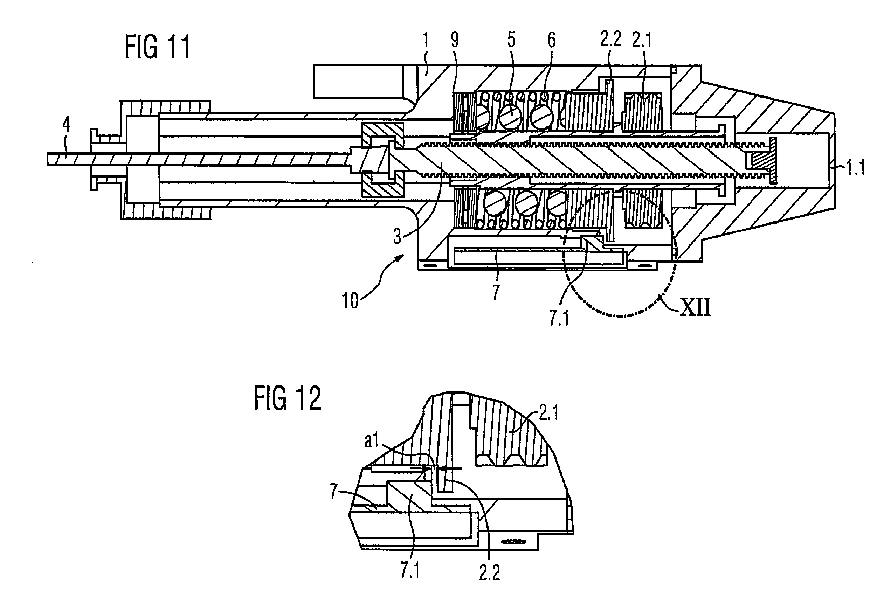

FIG 11,12 bzw. FIG 13,14 zeigen eine weitere erfindungsgemäße Ausgestaltung mit einem ersten elastischen Element 5 zur Bremsanzug-Kraftmessung sowie einem zweiten elastischen Element 6 zur Bremslöse-Kraftmessung. Beide elastischen Elemente sind als Schraubenfedern ausgeführt und umgreifen zueinander konzentrisch die Hohlwelle 2 bzw. die Spindelwelle 3 in baulicher Kompaktheit im Bereich der Steuereinheit 7.2;7.3.

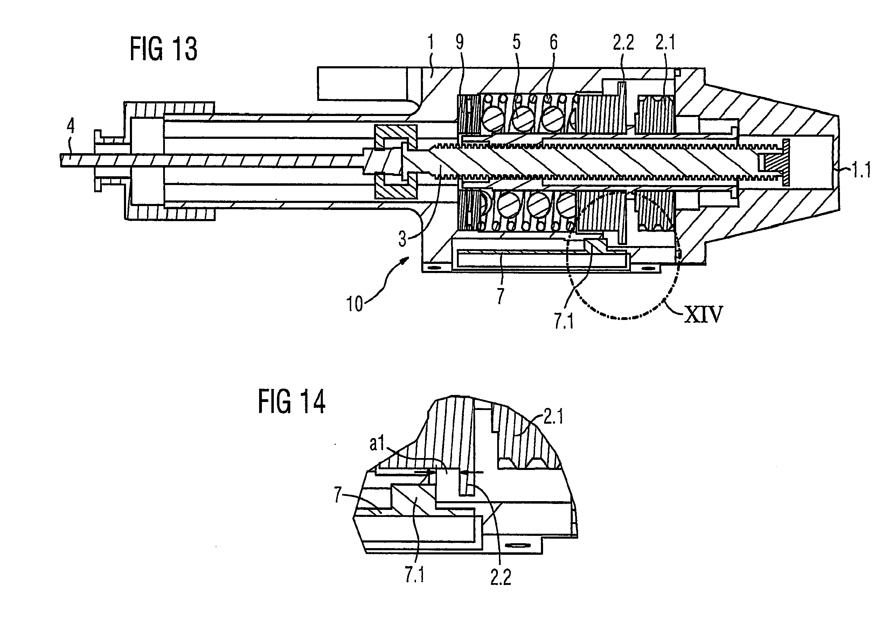

FIG 11 zeigt die Bremsstellung mit nach rechts in ihre Bremsendstellung angetriebener Spindelwelle 3 und gemäß FIG 12 mit entsprechendem Abstandsmaß a1 zwischen dem Kraftsensor-Geber 2.2 einerseits und dem zugeordneten Kraftsensor-Empfänger 7.1 andererseits. Das zweite elastische Element 6 ist dabei zu dem ersten elastischen Element 5 gleichwirkend parallelgeschaltet, jedoch nach einer Ausgestaltung der Erfindung mit einer unterschiedlichen Federungscharakteristik versehen, derart dass eine Vorschubabstützung aufgrund einer Druckkraft-Komprimierung dann noch verbleibt, wenn wie in FIG 13,14 angenommen - z.B. durch Drehrichtungsumkehr des Elektromotors - der Antrieb der Hohlwelle 2 und der Spindelwelle 3 im Sinne einer Bremslösebewegung des Bremszuges 4 erfolgt und sich dabei das größere Abstandsmaß a2 gemäß FIG 14 ergibt. Wie aus FIG 11 am rechten Ende der Hohlwelle 2 ersichtlich, ist zweckmäßigerweise ein Anschlag, insbesondere am Gehäusedeckel 1.1, vorgesehen, durch den verhinderbar ist, dass die axiale Bewegung der Hohlwelle 2 den maximalen Federweg des zweiten elastischen Elementes 6 überschreitet; durch ein entsprechendes Axialspiel vor dem Anschlag der Hohlwelle 2 ist eine verdeutlichte Nullpunkterkennung zwischen dem Belastungsende des ersten elastischen Elementes 5 und dem weiter andauernden Belastungsdruck auf das zweite elastische Element 6 bei Übergang zu dem Lösungsversuch gemäß FIG 13,14 auf einfache Weise möglich; eine weitere Verdeutlichung ist gemäß einer Ausgestaltung durch unterschiedliche Elastizitäts- bzw. Federkonstantenwahl der elastischen Elemente 5 bzw. 6 vorgesehen.

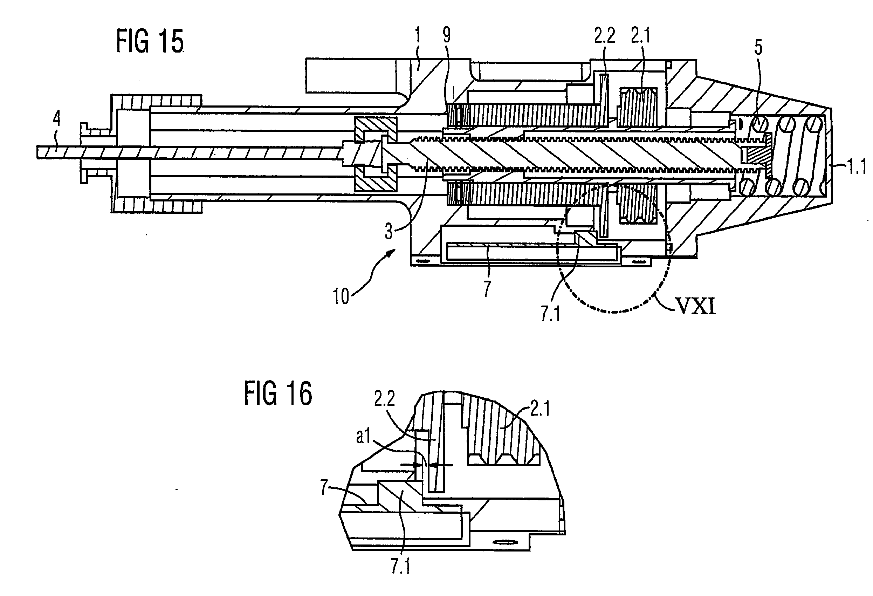

FIG 15,16 bzw. FIG 17,18 zeigen die erfindungsgemäße Lösung gemäß Anspruch 22 für eine Stelleinrichtung mit lediglich einer Überwachung der Lösungsbewegung der Feststellbremse.

FIG 15 zeigt dazu die Spindelwelle 8 in ihrer rechten Bremsstellung mit angezogenem Bremszug 4. Die Hohlwelle 2 stützt sich über den Kraftsensor-Geber 2.2 und das Axiallager 9 an dem Gehäuse 1 ab, das entsprechende Abstandsmaß a1 ist in dem vergrößertem Ausschnitt gemäß FIG 16 mit angegeben.

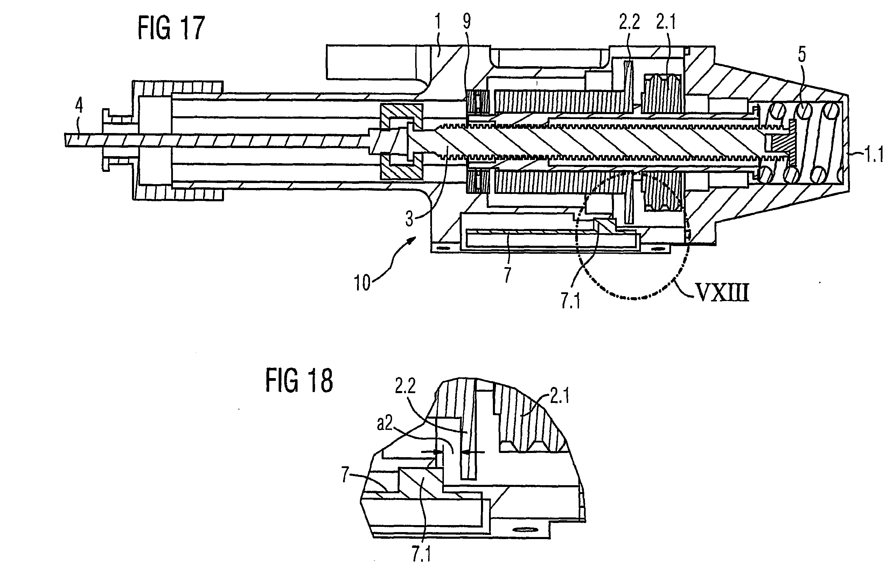

FIG 17,18 verdeutlichen die Blockierungserkennung des Bremszuges 3 bei einem Lösungsversuch der Bremse. Der blockierte Bremszug 4 drückt die Spindelwelle 3 sowie die Hohlwelle 2 nach rechts gegen das elastische Element 5; dementsprechend bewegt sich der Kraftsensor-Geber 2.2 auf das vergrößerte Abstandsmaß a2 gegenüber dem Kraftsensor-Empfänger 7.2. Kraftsensor-Empfänger 7.2 und Hohlwelle 2 stützen sich dabei nicht mehr an der linken Schulter des Gehäuses 1 ab.

Die Erfindung betrifft eine Stelleinrichtung, insbesondere für eine Kraftfahrzeug-Feststellbremse, mit von einer Stelleinheit 10 in einem Gehäuse 1 oder dergleichen axial verschiebbarer Teleskopvorrichtung 2;3 ,enthaltend eine Hohlwelle 2 und eine mit dieser in axialer Dreh-Vorschubverbindung stehenden, einen Bremszug 4 betätigenden Spindelwelle 3 sowie mit einer axialen Vorschubabstützung zwischen der Hohlwelle 2 und dem Gehäuse 1 über zumindest ein elastisches Element 5, das als Kraftsensor bei einem Bremsanzug oder einer blockierten Bremslösung dient; nach einer Ausgestaltung ist ein zweites elastisches Element 6 zur Blockierungserkennung des Bremszuges 4 bei einem Bremslöseversuch und dementsprechend nach Entspannung des ersten elastischen Elementes 5 vorgesehen.

## Patentansprüche

1. Stelleinrichtung, insbesondere Kraftfahrzeug-Feststellbremse,
- mit einer einen fremdkraftbetätigten Antrieb (8) aufweisenden Stelleinheit (10),
- mit einer in einem Gehäuse (1) oder dergleichen in Längsachse der Stelleinheit axial verschiebbaren Teleskopvorrichtung (2;3) enthaltend eine Hohlwelle (2) und eine mit dieser in axialer Dreh-Vorschubverbindung stehenden, einen Bremszug (4) betätigenden, Spindelwelle (3),
- mit einer drehfesten, axial verschiebbaren, Drehmoment übertragenden Verbindung zwischen dem fremdkraftbetätigten Antrieb (8) und der Hohlwelle (2), und
- mit einer axialen Vorschubabstützung zwischen der Hohlwelle (2) einerseits und dem Gehäuse (1) andererseits über zumindest ein relativ zu der Spindelwelle (3) und dem Bremszug (4)) stationäres und in Richtung der Hohlwelle (2) parallel angeordnetes, durch die Vorschubabstützung axial belastetes und **dadurch** axial längenverformbares, elastisches Element (5 bzw. 6),
**dadurch gekennzeichnet, dass** ein Getriebe-Antriebsrad (2.1) fest mit der Hohlwelle (2) verbunden und zusammen mit der Hohlwelle (2) axial zumindest im Maße des betriebsmäßigen axialen Hubweges (a1/a2) des zumindest einen elastischen Elementes (5/6) der Vorschubabstützung verschiebbar ist.

2. Stelleinrichtung nach Anspruch 1,
- mit einem Elektromotor für den fremdkraftbetätigten Antrieb (1) .

3. Stelleinrichtung nach Anspruch 1 und/oder 2,
- mit einem Getriebe (8.2;11;2.1) zwischen dem fremdkraftbetätigten Antrieb (8) und der Hohlwelle (2).

4. Stellantrieb nach Anspruch 3,
- mit einem Getriebezwischenrad (11) zwischen einem Abtriebsgetriebeelement (8.2) des fremdkraftbetätigten Antriebs (8) und einem Getriebe-Antriebsrad (2.1) der Hohlwelle (2);
- mit einer axialen Verschiebmöglichkeit zwischen dem Getriebe-Zwischenrad (11)und dem damit kämmenden Getriebe-Antriebsrad (2.1) der Hohlwelle (2) zumindest im Maße des betriebsmäßigen axialen Hubweges (a1 bzw. a2) des zumindest einen elastischen Elementes (5 bzw. 6).

5. Stelleinrichtung nach zumindest einem der Ansprüche 1 bis 4,
- mit einer Verwendung des zumindest einen elastischen Elements (5 bzw. 6) als bei dessen Längenverformung entsprechend axial bewegter, Kraftsensor-Geber (2.2) für die von dem motorischen Antrieb (8) über die Hohlwelle (2) auf die Spindelwelle (3) einwirkenden axialen Vorschubkraft.

6. Stelleinrichtung nach Anspruch 5,
- mit einem dem Kraftsensor-Geber (2.2) zugeordneten, relativ zu der Spindelwelle (3) und dem Bremszug (3) stationären Kraftsensor-Empfänger (7.1); insbesondere in Form eines dem magnetischen Kraftsensor-Geber (2.2) zugeordneten Hall-chips.

7. Stelleinrichtung nach Anspruch 6,
- mit einer Anordnung des Kraftsensor-Empfängers (2.2) als integriertes Teil einer, insbesondere von einer ortsfesten Leiterplatte (7) aufgenommenen, Steuereinheit (7.2;7.3) der Stelleinheit (10).

8. Stelleinrichtung nach Anspruch 7,
- mit einer Anordnung der Steuereinheit (7.2;7.3) im Bereich der Teleskopvorrichtung (2; 3).

9. Stelleinrichtung nach zumindest einem der Ansprüche 1 bis 8
- mit einer Ausbildung des zumindest einen elastischen Elementes (5 bzw. 6) als Schraubenfeder.

10. Stelleinrichtung nach Anspruch 9,
- mit einer Ausbildung bzw. Anordnung des zumindest einen elastischen Elementes (5 bzw. 6) als zu der Hohlwelle (2) bzw. der Spindelwelle (3), insbesondere in deren gegenseitigem Dreh-Vorschubantrieb, konzentrische, insbesondere die Hohlwelle (2) umfassende Schraubenfeder.

11. Stelleinrichtung nach zumindest einem der Ansprüche 1 bis 10,
- mit einer Ausbildung des zumindest einen elastischen Elementes (5 bzw. 6) als Druckfederelement.

12. Stelleinrichtung nach zumindest einem der Ansprüche 1 bis 10,
- mit einer Ausbildung des zumindest einen elastischen Elementes (5 bzw. 6) als Zugfederelement.

13. Stelleinrichtung nach einem der Ansprüche 5 bis 12,
- mit einer Verwendung des zumindest einen elastischen Elementes (5 bzw. 6) als Kraftsensor-Geber (2.2) zur Bestimmung der Bremsanzugskraft einer Kraftfahrzeug-Feststellbremse.

14. Stelleinrichtung nach einem der Ansprüche 5 bis 12,
- mit einer Verwendung des zumindest einen elastischen Elementes (5 bzw. 6) als Kraftsensor-Geber (2.2) zur Bestimmung der Bremslösekraft einer Kraftfahrzeug-Feststellbremse.

15. Stelleinrichtung nach zumindest einem der Ansprüche 1 bis 14,
- mit einem bei in der einen axialen Verschieberichtung der Teleskopvorrichtung (2;3) durch Vorschubabstützung axial belasteten ersten elastischen Element (5), insbesondere beim Anzug einer Kraftfahrzeug-Feststellbremse;
- mit einem bei in der anderen axialen Verschieberichtung der Teleskopvorrichtung (2;3) durch Vorschubabstützung axial belasteten zweiten elastischen Element (6), insbesondere beim Lösen einer Kraftfahrzeug-Feststellbremse.

16. Stelleinrichtung nach Anspruch 15,
- mit einer unterschiedlichen Elastizitätskonstante des ersten elastischen Elementes im Vergleich zu der Elastizitätskonstanten des zweiten elastischen Elementes (6).

17. Stelleinrichtung nach Anspruch 15 und/oder 16,
- mit einer Belastung des zweiten elastischen Elementes (6) nach vorheriger Entlastung des ersten elastischen Elementes (5).

18. Stelleinrichtung nach zumindest einem der Ansprüche 15 bis 17,
- mit einer Nullpunkterkennung zwischen dem Übergang der Entlastung des ersten elastischen Elementes (5) einerseits und der Belastung des zweiten elastischen Elementes (6) andererseits.

19. Stelleinrichtung nach zumindest einem der Ansprüche 15 bis 18,
- mit einer Anordnung des zweiten elastischen Elementes (6) axial vor bzw. hinter dem ersten elastischen Element (5).

20. Stelleinrichtung nach zumindest einem der Ansprüche 1 bis 19
- mit einer zueinander konzentrischen Anordnung des ersten elastischen Elementes (5) und des zweiten elastischen Elementes (6).

21. Stelleinrichtung nach Anspruch 1
- mit einer Ausbildung des zumindest einen elastischen Elementes (5 bzw. 6) als Druck-Zugfederelement, insbesondere mit unterschiedlicher Druckfeder-Konstante im Vergleich zur Zugfederelement-Konstante.

22. Stelleinrichtung, insbesondere Kraftfahrzeug-Feststellbremse,
- mit einer einen fremdkraftbetätigten Antrieb (8) aufweisenden Stelleinheit (10),
- mit einer in einem Gehäuse (1) oder dergleichen in Längsachse der Stelleinheit axial verschiebbaren Teleskopvorrichtung (2;3) enthaltend eine Hohlwelle (2) und eine mit dieser in axialer Dreh-Vorschubverbindung stehenden, einen Bremszug (4) in Lösestellung einer Bremse betätigenden, Spindelwelle (3),
- mit einer drehfesten, axial verschiebbaren , Drehmoment übertragenden Verbindung zwischen dem fremdkraftbetätigten Antrieb (1) und der Hohlwelle (2), und
- mit einer axialen Vorschubabstützung zwischen der Hohlwelle (2) einerseits und dem Gehäuse (1) andererseits über zumindest ein relativ zu der Spindelwelle (3) und dem Bremszug (3) stationäres, durch die Vorschubabstützung bei Blockierung des Bremszuges (4) während eines Antriebes in die Lösestellung der Bremse axial belastetes und **dadurch** axial längenverformbares elastisches Element (5 bzw. 6),
**dadurch gekennzeichnet, dass** ein Getriebe-Antriebsrad (2.1) fest mit der Hohlwelle (2) verbunden und zusammen mit der Hohlwelle (2) axial zumindest im Maße des betriebsmäßigen axialen Hubweges (a1/a2) des zumindest einen elastischen Elementes (5/6) der Vorschubabstützung verschiebbar ist.

23. Stelleinrichtung nach Anspruch 22,
- mit den Merkmalen zumindest eines der Ansprüche 2 bis 12.

## Claims

1. Setting device, especially motor vehicle parking brake,
- with a setting unit (10) featuring a remotely-operated drive (8),
- with a telescopic device (2: 3) movable axially in a housing (1) or similar in a longitudinal axis of the setting unit, containing a hollow shaft (2) and a spindle shaft (3) connected to it in a manner that enables it to rotate and advance and actuate a brake cable (4),
- with a non-rotating axially movable connection, which transmits torque, between the remotely-operated drive (8) and the hollow shaft (2) and,
- with an axial advancing support between the hollow shaft (2) on the one side and the housing (8) on the other side via at least one elastic element (5 or 6) stationary relative to the spindle shaft (3) and the brake cable (4)) and arranged in parallel in the direction of the hollow shaft (2) loaded axially by the advancing support and thereby axially deformable, **characterized in that** a drive gear wheel (2.1) is fixedly connected to the hollow shaft (2) and can be moved together with the hollow shaft (2) axially at least to the extent of the operational axial stroke distance (a1 or a2) of the at least one elastic element (5 or 6) of the advancing support.

2. Setting device in accordance with claim 1,
- with an electric motor for the remotely-operated drive (1).

3. Setting device in accordance with claim 1 and/or 2,
- with a transmission (8.2; 11; 2.1) between the remotely-operated drive (8) and the hollow shaft (2).

4. Setting drive in accordance with claim 3,
- with an intermediate gear wheel (11) between a drive gear element (8.2) of the remotely-operated drive (8) and a drive gear wheel (2.1) of the hollow shaft (2);
- with an axial movement option between the intermediate gear wheel (11) and the meshing drive gear wheel (2.1) of the hollow shaft (2) at least to the extent of the operational stroke distance (a1 or a2) of the at least one elastic element (5 or 6).

5. Setting device in accordance with at least one of the claims 1 to 4,
- with the at least one elastic element (5 or 6) being used as a correspondingly axially moved force sensor emitter (2.2) for its longitudinal deformation for the axial advancing force acting from the motorized drive (8) via the hollow shaft (2) on the spindle shaft (3).

6. Setting device in accordance with claim 5,
- with a force sensor receiver (7.1) stationary relative to the spindle shaft (3) and the brake cable (3) assigned to the force sensor emitter (2.2); especially in the form of a Hall chip assigned to the magnetic force sensor emitter (2.2).

7. Setting device in accordance with claim 6,
- with an arrangement of the force sensor receiver (2.2) as an integrated part of a control unit (7.2; 7.3) of the setting unit (10), especially accommodated by a fixed circuit board (7).

8. Setting device in accordance with claim 7,
- with the control unit (7.2; 7.3) being arranged in the area of the telescopic device (2; 3).

9. Setting device in accordance with at least one of the claims 1 to 8
- with the at least one elastic element (5 or 6) being embodied as a spring screw.

10. Setting device in accordance with claim 9,
- with the at least one elastic element (5 or 6) being arranged or embodied as a spring screw surrounding especially the hollow shaft (2) concentric to the hollow shaft (2) or the spindle shaft (3) especially in its opposite direction of rotational advance.

11. Setting device in accordance with at least one of the claims 1 to 10,
- with the at least one elastic element (5 or 6) being embodied as a compression spring element.

12. Setting device in accordance with at least one of the claims 1 to 10,
- with at least one elastic element (5 or 6) being embodied as a tension spring element.

13. Setting device in accordance with one of the claims 5 to 12,
- with the at least one elastic element (5 or 6) being used as a force sensor emitter (2.2) for determining the brake application force of a motor vehicle parking brake.

14. Setting device in accordance with one of the claims 5 to 12,
- with the at least one elastic element (5 or 6) being used as a force sensor emitter (2.2) for determining the brake release force of a motor vehicle parking brake.

15. Setting device in accordance with at least one of the claims 1 to 14,
- with first elastic element (5) loaded axially by advancing support for an axial advancing movement of the telescopic device (2; 3), especially on application of a motor vehicle parking brake;
- with a second elastic element (6) loaded axially in the other axial direction of movement of the telescopic device (2: 3) by advancing support, especially on release of a motor vehicle parking brake.

16. Setting device in accordance with claim 15,
- with a different elasticity constant of the first elastic element by comparison with the elasticity constant of the second elastic element (6).

17. Setting device in accordance with claim 15 and/or 16,
- with a loading of the second elastic element (6) after previous unloading of the first elastic element (5).

18. Setting device in accordance with at least one of the claims 15 to 17,
- with a zero point detection between the transition of the unloading of the first elastic element (5) on the one hand and the loading of the second elastic element (6) on the other hand.

19. Setting device in accordance with at least one of the claims 15 to 18,
- with an arrangement of the second elastic element (6) axially before or after the first elastic element (5).

20. Setting device in accordance with at least one of the claims 1 to 19
- with a concentric arrangement in relation to each other of the first elastic element (5) and of the second elastic element (6).

21. Setting device in accordance with claim 1
- with an embodiment of the at least one elastic element (5 or 6) as pressure compression element, especially with different compression spring constants by comparison with the tension spring element constant.

22. Setting device, especially motor vehicle parking brake,
- with a drive unit (10) featuring a remotely-operated drive (8),
- with a telescopic device (2: 3) movable axially in a housing (1) or similar in a longitudinal axis of the setting unit, containing a hollow shaft (2) and a spindle shaft (3) connected to it in a manner that enables it to rotate and advance and actuate a brake cable (4) into the release position of a brake,
- with a non-rotating axially advanceable connection which transports torque between the remotely-operated drive (1) and the hollow shaft (2),
- with an axially advancing support between the hollow shaft (2) on the one side and the housing (1) one the other side via at least elastic element (5 or 6) stationary relative to the spindle shaft (3) and the brake cable (3) by the advancing support when blocking the brake cable (4) during a drive into the release position of the brake of an axially loaded and thereby axially longitudinally deformable elastic element (5 or 6), **characterized in that** a drive gear wheel (2.1) is fixedly connected to the hollow shaft (2) and can be moved together with the hollow shaft (2) axially at least to the extent of the operational axial stroke distance (a1/a2) of the at least one elastic element (5/6) of the advancing support.

23. Setting device in accordance with claim 22,
- with the features of at least of one of the claims 2 to 12.

## Revendications

1. Dispositif de réglage, en particulier frein de stationnement de véhicule automobile, comprenant
- une unité de réglage (10) qui présente un entraînement actionné par une force extérieure (8),
- un dispositif télescopique (2 ; 3) mobile en translation axiale selon l'axe longitudinal de l'unité de réglage à l'intérieur d'un boîtier (1) ou équivalent, contenant un arbre creux (2) et une vis (3) qui est en liaison axiale en rotation et en translation avec cet arbre et qui actionne un organe de serrage de frein (4),
- une liaison de transmission du couple, solidaire en rotation, mobile en translation axiale, entre l'entraînement actionné par la force extérieure (8) et l'arbre creux (2), et
- un organe d'appui d'avance axial entre l'arbre creux (2), d'une part, et le boîtier (1), d'autre part, opérant par l'intermédiaire d'au moins un élément élastique (5 ou 6) fixe par rapport à la vis (3) et à l'organe de serrage de frein (4) et disposé parallèlement à la direction de l'arbre creux (2), qui est chargé axialement par l'appui d'avance et peut être déformé en longueur dans la direction axiale par cet appui,
**caractérisé**
**en ce qu'**une roue d'entrée de mécanisme (2.1) est reliée rigidement à l'arbre creux (2) et peut se déplacer axialement en translation conjointement avec l'arbre creux (2), au moins dans la mesure de la course axiale de service (a1/a2) de l'au moins un élément élastique (5/6) de l'appui d'avance.

2. Dispositif de réglage selon la revendication 1, comprenant
- un moteur électrique pour l'entraînement actionné par une force extérieure (1).

3. Dispositif de réglage selon la revendication 1 et/ou 2, comprenant
- un mécanisme (8.2 ; 11 ; 2.1) entre l'entraînement actionné par une force extérieure (8) et l'arbre creux (2).

4. Dispositif de réglage selon la revendication 3, comprenant
- une roue intermédiaire de mécanisme (11) entre un élément de sortie (8.2) de l'entraînement actionné par une force extérieure (8) et une roue d'entrée (2.1) de mécanisme de l'arbre creux (2) ;
- une possibilité de translation axiale entre la roue intermédiaire de mécanisme (11) et la roue d'entrée de mécanisme (2.1) de l'arbre creux (2) qui engrène avec elle, au moins dans la mesure de la course axiale de service (a1 ou a2) de l'au moins un élément élastique (5 ou 6).

5. Dispositif de réglage selon au moins une des revendications 1 à 4, comprenant
- une utilisation de l'au moins un élément élastique (5 ou 6) en tant qu'émetteur de capteur de force (2.2) pour la force d'avance axiale exercée par l'entraînement à moteur (8) sur la vis (3) par l'intermédiaire de l'arbre creux (2) et qui, lors d'une déformation longitudinale de cet élément, se déplace axialement de façon correspondante.

6. Dispositif de réglage selon la revendication 5, comprenant
- un récepteur de capteur de force (7.1), associé à l'émetteur de capteur de force (2.2), stationnaire par rapport à la vis (3) et à l'organe de serrage de frein (3) formé en particulier d'une puce à effet Hall associée à l'émetteur de capteur de force magnétique (2.2)

7. Dispositif de réglage selon la revendication 6, comprenant
- un agencement du récepteur de capteur de force (2.2) en tant que partie intégrée d'une unité de commande (7.2 ; 7.3) de l'unité de réglage (10) qui est en particulier portée par une carte de circuit imprimé (7) fixe en position.

8. Dispositif de réglage selon la revendication 7, comprenant
- un agencement de l'unité de commande (7.2 ; 7.3) dans la région du dispositif télescopique (2 ; 3).

9. Dispositif de réglage selon au moins une des revendications 1 à 8, comprenant
- une configuration de l'au moins un élément élastique (5 ou 6) sous la forme d'un ressort hélicoïdal.

10. Dispositif de réglage selon la revendication 9, comprenant
- une configuration ou agencement de l'au moins un élément élastique (5 ou 6) sous la forme d'un ressort hélicoïdal concentrique à l'arbre creux (2) ou à la vis (3), en particulier concentrique à leur entraînement mutuel en rotation et translation, et qui, en particulier, entoure l'arbre creux (2).

11. Dispositif de réglage selon au moins une des revendications 1 à 10, comprenant
- une configuration de l'au moins un élément élastique (5 ou 6) sous la forme d'un élément ressort de compression.

12. Dispositif de réglage selon au moins une des revendications 1 à 10, comprenant
- une configuration de l'au moins un élément élastique (5 ou 6) sous la forme d'un élément ressort de traction.

13. Dispositif de réglage selon une des revendications 5 à 12, comprenant
- une utilisation de l'au moins un élément élastique (5 ou 6) en tant qu'émetteur de capteur de force (2.2) pour la détermination de la force de serrage d'un frein de stationnement de véhicule automobile.

14. Dispositif de réglage selon une des revendications 5 à 12, comprenant une utilisation de l'au moins un élément élastique (5 ou 6) en tant qu'émetteur de capteur de force (2.2) pour la détermination de la force de serrage d'un frein de stationnement de véhicule automobile.

15. Dispositif de réglage selon au moins une des revendication 1 à 14, comprenant
- un premier élément élastique (5) qui est chargé axialement par un appui d'avance dans un premier sens de translation axiale du dispositif télescopique (2 ; 3), en particulier lors du serrage d'un frein de stationnement de véhicule automobile ;
- un deuxième élément élastique (6) qui est chargé axialement par un appui d'avance dans l'autre sens de translation axiale du dispositif télescopique (2 ; 3), en particulier lors du desserrage d'un frein de stationnement de véhicule automobile.

16. Dispositif de réglage selon la revendication 15, comprenant
- une constante d'élasticité du premier élément élastique qui est différente de la constante d'élasticité du deuxième élément élastique (6).

17. Dispositif de réglage selon la revendication 15 et/ou 16, comprenant
- une mise en charge du deuxième élément élastique (6) après détente préalable du premier élément élastique (5).

18. Dispositif de réglage selon au moins une des revendications 15 à 17, comprenant
- une détection du point mort entre la transition de la détente du premier élément élastique (5), d'une part, et la mise en charge du deuxième élément élastique (6), d'autre part.

19. Dispositif de réglage selon au moins une des revendications 15 à 18, comprenant
- une disposition du deuxième élément élastique (6) axialement en amont ou en aval du premier élément élastique (5).

20. Dispositif de réglage selon au moins une des revendications 1 à 19, comprenant
- un agencement mutuellement concentrique du premier élément élastique (5) et du deuxième élément élastique (6).

21. Dispositif de réglage selon la revendication 1, comprenant
- une configuration de l'au moins un élément élastique (5 ou 6) sous la forme d'un élément ressort de compression-traction, en particulier possédant une constante de ressort de compression différente de la constante de l'élément ressort de traction.

22. Dispositif de réglage, en particulier frein de stationnement de véhicule automobile, comprenant
- une unité de réglage (10) qui présente un entraînement (8) actionné par une force extérieure,
- un dispositif télescopique (2 ; 3) mobile en translation axiale selon l'axe longitudinal de l'unité de réglage à l'intérieur d'un boîtier (1) ou équivalent, contenant un arbre creux (2) et une vis (3) qui est en liaison axiale en rotation et en translation avec cet arbre et qui, dans la position desserrée d'un frein, actionne un organe de serrage de frein (4),
- une liaison de transmission du couple, solidaire en rotation, mobile en translation axiale, entre l'entraînement actionné par la force extérieure (1) et l'arbre creux (2), et
- un organe d'appui d'avance axial entre l'arbre creux (2), d'une part, et le boîtier (1), d'autre part, opérant par l'intermédiaire d'au moins un élément élastique (5 ou 6) fixe par rapport à la vis (3) et à l'organe de serrage de frein (4) et disposé parallèlement à la direction de l'arbre creux (2), qui est chargé axialement par l'appui d'avance lors du blocage de l'organe de serrage du frein (4) pendant un entraînement aboutissant à la position de serrage du frein et qui peut être déformé en longueur dans la direction axiale par cette action,
**caractérisé en ce qu'**une roue d'entrée de mécanisme (2.1) est reliée rigidement à l'arbre creux (2) et peut se déplacer axialement en translation conjointement avec l'arbre creux (2), au moins dans la mesure de la course axiale de service (a1/a2) de l'au moins un élément élastique (5/6) de l'appui d'avance.

23. Dispositif de réglage selon la revendication 22, comprenant
- les caractéristiques d'au moins une des revendications 2 à 12.
